# EUROPEAN PATENT APPLICATION

(11) **EP 4 537 647 A1**
(43) Date of publication of application: **16.04.2025**
(21) Application number: 24202414.9
(22) Date of filing: 25.09.2024
(51) Int. Cl.: A01B 76/00, A01M 7/00, A01B 63/00, A01D 78/00, A01D 78/10

(54) **OPTIMIZED SEQUENCE CONTROL FOR AN AGRICULTURAL MACHINE**

(30) Priority: 12.10.2023 GB 202315661
(71) Applicant: AGCO International GmbH, 8212 Neuhausen am Rheinfall (CH)
(72) Inventor: Wiedenmann, Markus, 87616 Marktoberdorf (DE)
(74) Representative: AGCO Intellectual Property Department

(57) **Abstract**

An agricultural machine (102) has an implement (106), an actuator (222, 228, 234, 250), a human machine interface (122) for manually controlling the actuator (222, 228, 234, 250), a control unit (124) and at least one sensor (224, 232, 238, 240, 242, 244, 246). The control unit (124) is configured to execute a method for a sequence control to optimize a sequence step of the sequence control in case of a poor operation of the implement (106).

## Description

### FIELD

The present disclosure relates generally to a sequence control for agricultural machines.

### BACKGROUND

US 2001/0016794 A1, "Vehicle function management system", published on August 23, 2001, discloses a sequence control with a learn mode to record a sequence of manually triggered machine operations when operating a human machine interface and a replay mode to automatically execute the recorded sequence. Each manual triggered machine operation may be recorded as a separate sequence step. The automatic execution of the sequence may be initiated manually by pressing a corresponding switch in the agricultural machine.

Sequence control may be combined with a headland operation for turning an agricultural machine in an agricultural field. A first sequence may be executed when the agricultural machine enters the headland and a second sequence may be executed when the agricultural machine leaves the headland to continue the field operation.

US 2007/0255470 A1, "Method for controlling an agricultural machine system", published on November 1, 2007, discloses a sequence control with a learn mode to record a sequence of manually triggered machine operations for a later automatic execution. The execution of the sequence (replay mode) can be initiated automatically when an approaching of a specific position of the agricultural machine in the field has been determined.

### BRIEF SUMMARY

Since a sequence control executes its sequence steps as recorded, the performance of the sequence may depend on the skill level of the operator teaching the sequence control. If a sequence step has been learned based on operational inputs of an unskilled operator, an execution of the sequence may not provide an optimal performance. Hence, it is an objective to provide a sequence control configured to compensate poor operational inputs for recording of improved sequence steps.

According to an aspect of the invention there is provided an agricultural machine including an implement, an actuator, a human machine interface (HMI) for manually controlling the actuator, a control unit, and at least one sensor. The control unit is configured to record a sequence step of a sequence control including a command to control the actuator based on a manual operation of the human machine interface if a learn mode is active, execute the recorded sequence step including the command to control the actuator if a replay mode is active, control the actuator according to the command of the sequence step, receive at least one sensor signal from the at least one sensor, compare the at least one sensor signal with a reference value for determining a poor operation of the implement in response to a controlling of the actuator according to the command of the sequence step, and optimize the sequence step of the sequence control in case of a poor operation of the implement.

The implement may be used to treat the agricultural field such as a plough, a rake, a sprayer, a mower, a trailer, etc. Depending on the type of the implement, the implement may comprise one or more tools such as a rake rotor, a mower knife, a seeding unit, a spray nozzle, a shovel, a dumper, etc. The actuator may be in connection with or attached to the implement and may drive the implement or the tool. The actuator may be a hydraulic actuator such as a hydraulic cylinder or an electromechanical actuator such as an electric motor. But also other types of actuators are possible.

The human machine interface may comprise several input and output devices such as a joystick, a control lever, knobs, potentiometer, touch display, etc. Each input device may be assigned to another actuator to control different actuators of the agricultural machine. An operator may manually manipulate the human machine interface for controlling the actuators. The control unit may receive a signal from the human machine interface in response to the manual manipulation thereof. Thus, the control unit may also receive a sequence of manipulations of one or more input devices of the human machine interface and control the actuators accordingly. The operator may also manipulate an input device to (de-)activate the learn mode or to (de-)activate the replay mode of the sequence control.

When the learn mode is active, the control unit may record each received signal due to a manipulation of the human machine interface. Each single manipulation of the sequence of manipulations may be recorded as a separate sequence step. A sequence step may comprise a command for controlling the actuator as demanded by the manipulation of the human machine interface and a condition. The command may define at least one control signal to raise or lower the implement for adjusting a distance between the implement and the agricultural field, control a movement of an actuator for adjusting a position, a speed or an acceleration of a tool, control an actuator of the agricultural machine for adjusting a pressure, a force, a torque, or any other signal that can be generated by manipulating the human machine interface. The condition may define an event to be fulfilled for triggering the execution of the command, such as a position to be reached by the agricultural machine or a time limit to be elapsed. Thus, the command of the sequence step can be executed automatically at the same position or at the same time point as the sequence step had originally been recorded.

The at least one sensor may be of any type for determining a position, a speed, an acceleration, a pressure, a force, a torque, a voltage, an electrical current, a noise, an image, or any other parameter or physical quantity.

The implement may be poorly operated, e. g. due to a poor manipulation of the human machine interface by an unskilled operator or due to an execution of a sequence step based on a recording of a poor manipulation of the human machine interface. Such a poor manipulation of the human machine interface may cause a maloperation or an excessive operation of the implement. For example, the actuator, the tool or the whole implement may collide against an end stop or hit the agricultural field causing noise, unwanted vibrations or damage to the implement. By means of the at least one sensor, such a poor operation may be detected. For example, a collision against an end stop or the agricultural field may cause noise, vibrations or a hydraulic pressure peak detectable by a corresponding sensor such as an acoustic sensor, an acceleration sensor or a pressure sensor. Then, the control unit may adjust the command or the condition of the corresponding sequence step for optimizing the sequence step and thus the operation of the implement when the sequence step is executed automatically. The control unit may optimize the sequence step based on predefined rules, by means of a neuronal network or other algorithms used for artificial intelligence (Al) applications. As consequence for example, a collision against an end stop or the agricultural field can be mitigated or totally avoided.

The actuator may be configured to operate the implement.

For example, the actuator may adjust the height of the implement in relation to the agricultural field for adjusting a distance therebetween. Alternatively, the actuator may adjust the position, speed or acceleration of the tool(s). The actuator may also adjust a force or a torque of the tool(s). I. e., depending on the type of the implement, the actuator may control a rake rotor, a mower knife, a seeding unit, a spray nozzle, a shovel, a dumper, etc.

The sequence step may include at least one parameter assigned to the command of the sequence step. The control unit may be configured to adjust the parameter of the sequence step if the at least one sensor signal exceeds the reference value.

The parameter may quantify the command for setting or adjusting a physical quantity of the implement or a tool. For example, the parameter may define a height position to which the implement shall be moved to, a rotational speed of the tool, an axial force of the actuator, a torque of the actuator, or any other physical quantity of the agricultural machine that is adjustable by an actuator controlled according to the command of the sequence step. The control unit may adjust the parameter to optimize the sequence step of the sequence control. As consequence for example, a collision against an end stop or the agricultural field can be mitigated or totally avoided.

The at least one sensor signal may be a pressure signal. The poor operation of the implement may be determined if the pressure signal exceeds the reference value.

The actuator may be a hydraulic actuator supplied with a hydraulic fluid via a hydraulic line. A pressure sensor may be connected to the hydraulic line for determining the hydraulic pressure in the line. In case of a collision of the actuator, the implement or the tool against an end stop or the agricultural field for example, a pressure peak may be induced in the hydraulic line. The pressure sensor may detect the pressure peak and send a corresponding signal to the control unit. Then, the control unit may determine a poor operation if the pressure peak indicating the collision exceeds the reference value representative for an excessive operation of the implement.

The at least one sensor signal may be a strain signal. The poor operation of the implement may be determined if the strain signal exceeds the reference value.

A strain gauge as sensor may be attached to the agricultural machine, for example to a tool holder of the implement carrying the tool. In case of a collision of the actuator, the implement or the tool against an end stop or the agricultural field for example, an impact may be induced in the agricultural machine causing a small deformation of a part of the agricultural machine, e. g. the tool holder. The strain gauge may detect the impact or the deformation respectively and send a corresponding signal to the control unit. Then, the control unit may determine a poor operation if the sensor signal exceeds the reference value representative for an excessive operation of the implement.

The at least one sensor signal may be an acoustic signal. The poor operation of the implement may be determined if the acoustic signal exceeds the reference value.

The acoustic sensor may be attached anywhere to the agricultural machine, for example to a tool holder. In case of a collision of the actuator, the implement or the tool against an end stop or the agricultural field for example, a noise may be generated. The acoustic sensor may detect the noise and send a corresponding signal to the control unit. Then, the control unit may determine a poor operation if the sensor signal exceeds the reference value representative for an excessive operation of the implement.

The reference value may define a volume threshold within a frequency band representative for noises caused by the implement hitting the agricultural field or an end stop.

Thus, the control unit may avoid unintentional adjustments of a sequence step due to noises not related to maloperation or excessive operation of the implement such as motor sound even if the motor sound would exceed the volume threshold. The control unit would adjust the sequence step only if noises indicating an excessive operation of the implement exceed the reference value. Other noises may be ignored by the control unit.

Optionally, the control unit may optimize the sequence step if at least two sensor signals received from two sensors of different type exceed each a corresponding reference value. For example, if the pressure signal and the acoustic signal exceed a corresponding reference value.

The agricultural machine may include a vehicle interface. The at least one sensor may be configured to detect an impact due to a collision against an end stop of the vehicle interface, a collision against an end stop of the actuator, or the implement hitting the agricultural field.

The vehicle interface may be a hitch comprising an actuator, e. g. a hydraulic cylinder, for adjusting the height position of the hitch. The implement may be attached to the hitch for adjusting the height of the implement and controlling the distance between the implement and the agricultural field. The end stop may be a mechanical end stop preventing a movement of a mechanical part colliding against the end stop. For example, a piston of a hydraulic cylinder may be blocked by an upper end position of the cylinder if the piston is fully ejected or by a lower end position of the cylinder if the piston is fully rejected in the cylinder. Similarly, other components of the agricultural machine may have an end stop as for example the vehicle interface defining a lower end stop and an upper end stop therebetween the height of the implement may be adjusted. When the height of the implement is lowered, the implement may hit the agricultural field when the implement gets in contact with the agricultural field.

The control unit may be configured to reduce the impact by adjusting the at least one parameter.

For example, the control unit may adjust the parameter of the sequence step so that the actuator stops before a collision against an end stop or a hit against the agricultural field occurs. Alternatively, the control unit may adjust the parameter so that the reference value is not exceeded. For example, a jerky movement of the vehicle interface or the actuator may be smoothened by the adjustment of the parameter to avoid an exceedance of the reference value.

The at least one parameter may include a speed or acceleration parameter. The control unit may be configured to reduce the at least one parameter for reducing the impact.

The speed parameter may define a speed for adjusting the height of the implement, for moving a tool holder or for moving a tool. For example, the speed parameter may define a speed of the actuator to control the tool holder. Analogously, the acceleration parameter defines an acceleration for moving the implement or any moveable part thereof. The speed or acceleration may be reduced by a predefined value, e. g. 10%, stored in a memory of the control unit. Alternatively, the reduction may be determined based on predefined rules or algorithms stored in the memory. The speed or the acceleration may be reduced by means of a ramping down for avoidance of an abrupt reduction of the speed or the acceleration that may cause other impacts such as vibrations.

The at least one parameter may include a position parameter of the vehicle interface or the implement. The control unit may be configured to adjust the position parameter for reducing the impact.

The position parameter may define a position to which the vehicle interface, the implement or a moveable part thereof such as the tool holder or the tool shall be positioned. For example, the position parameter may define a position of a fully folded tool holder or a position of a fully unfolded tool holder. For the case, that the tool holder or the actuator controlling the tool holder had collided against an end stop, a new position may be defined by the control unit defining a position being slightly distant from the end stop so that the actuator or the tool holder stops moving before colliding against the end stop. The adjustment of the position may be based on a predefined value, rules or algorithms stored in the memory. Analogously, any other position of the vehicle interface, the implement or a tool thereof may be adjusted such as a position defining a height of the implement (distance between the implement and the agricultural field) for example.

The sequence step of the sequence control may include a condition for triggering the command of the sequence step. The control unit may be configured to adjust the condition of the sequence step if the sensor signal exceeds the reference value.

The control unit may adjust the condition of the sequence step so that the actuator stops before a collision against an end stop, a hit against the agricultural field or any other impact occurs. Alternatively, the control unit may adjust the condition so that the reference value is not exceeded.

The condition for triggering the command of the sequence step may include a waypoint at which the command of the sequence step is executed. The control unit may be configured to adjust the position of the waypoint.

The command of a sequence step may be executed when the agricultural machine moving along a path arrives the waypoint. The control unit may adjust the position of the waypoint to a position that will be arrived by the agricultural machine before the other position when moving along the path so that an earlier execution of the command of the sequence step can be achieved. Simultaneously, a speed or acceleration parameter of the corresponding sequence step can be reduced for example, to avoid excessive vibrations due to a too fast or jerky operation of the implement. I. e., an earlier execution of a command may compensate a duration requiring more time for executing the command due to a reduced speed or acceleration parameter resulting in a reduced impact. The adjustment of the waypoint may be based on a predefined value, rules or algorithms stored in the memory.

The condition for triggering the command of the sequence step may include a time point at which the command of the sequence step is executed. The control unit may be configured to adjust the time point.

The command of a sequence step may be executed when the time point has been elapsed, e. g. a time delay between two consecutive sequence steps. The control unit may adjust the time point of a sequence step so that an earlier execution of the command of the sequence step can be achieved. Simultaneously, a speed or acceleration parameter of the corresponding sequence step can be reduced for example, to avoid excessive vibrations due to a too fast or jerky operation of the implement. I. e., an earlier execution of a command may compensate a longer required duration for executing the command due to a reduced speed or acceleration parameter resulting in a reduced impact. The adjustment of the time point may be based on a predefined value, rules or algorithms stored in the memory.

The control unit may be configured to reduce the impact by adjusting the condition of the sequence step.

Thus, a collision against an end stop of the vehicle interface, a collision against an end stop of the actuator or a part of the implement, or the implement hitting the agricultural field may be mitigated or fully avoided.

The agricultural machine may include a first actuator and also a second actuator. The control unit may be configured to record a first sequence step of the sequence control including a command to control the first actuator, record a second sequence step of the sequence control including a command to control the second actuator, and reduce an impact caused by the second actuator by optimizing the first sequence step.

Thus, the optimization of the first sequence step can also effect an optimization of the second sequence step. For example, a smoother operation of the implement by the first actuator may effect a smoother operation of the implement by the second actuator. This effect may arise when both actuators are controlled at the same time. For example, the hitch may be lowered to reduce the distance between the implement and the agricultural field. Hence, the closer the implement is positioned in respect of the agricultural field by executing a first sequence step, the greater the impact will be when the tool holders are unfolded to bring the tools in contact with the agricultural field by execution of a second sequence step. So, an impact caused during execution of the second sequence step may be reduced by optimizing the first sequence step in such a way that the implement is positioned with a sufficient distance between the implement and the agricultural field to bring the tools smoothly in contact with the agricultural field.

The agricultural machine may include a vehicle. The control unit may be configured to adjust a parameter of the vehicle.

The agricultural machine may be a vehicle-implement combination. The vehicle may generate a tractive force to tow the implement through the agricultural field when the vehicle moves along the path. The implement may be fixed to the vehicle or detachably connected with the vehicle. The vehicle may be an agricultural vehicle such as a tractor, a harvester, a combine, a sprayer or of any other type such as a truck. The actuator may be in connection with or attached to the vehicle. The actuator may control any parameter of the vehicle such as speed or acceleration. For example, the actuator is a brake actuator to reduce the speed of the agricultural machine. The actuator of the vehicle may be controlled by the control unit analogously to the actuators of the implement. The control unit may also record or execute sequence steps for controlling the actuator of the vehicle.

Another aspect includes a method for a sequence control. The method comprises steps for recording a sequence step of a sequence control including a command to control an actuator based on a manual operation of a human machine interface if a learn mode is active, executing the recorded sequence step including the command to control the actuator if a replay mode is active, controlling the actuator according to the command, receiving at least one sensor signal from at least one sensor, comparing the at least one sensor signal with a reference value for determining a poor operation of an implement in response to a controlling of the actuator according to the command of the sequence step, and optimizing the sequence step of the sequence control in case of a poor operation of the implement.

The method may be executed by the control unit. The method may comprise additional method steps wherein the method steps may be executed as disclosed in this application.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates an agricultural machine comprising a vehicle and an implement connected thereto.
FIG. 2 illustrates a control schematic of the agricultural machine of FIG. 1.
FIG. 3 illustrates the agricultural machine working in an agricultural field.
FIG. 4 illustrates a flow diagram for a method for a sequence control.
FIG. 5 illustrates schematically several sequence steps of a sequence control.

### DETAILED DESCRIPTION

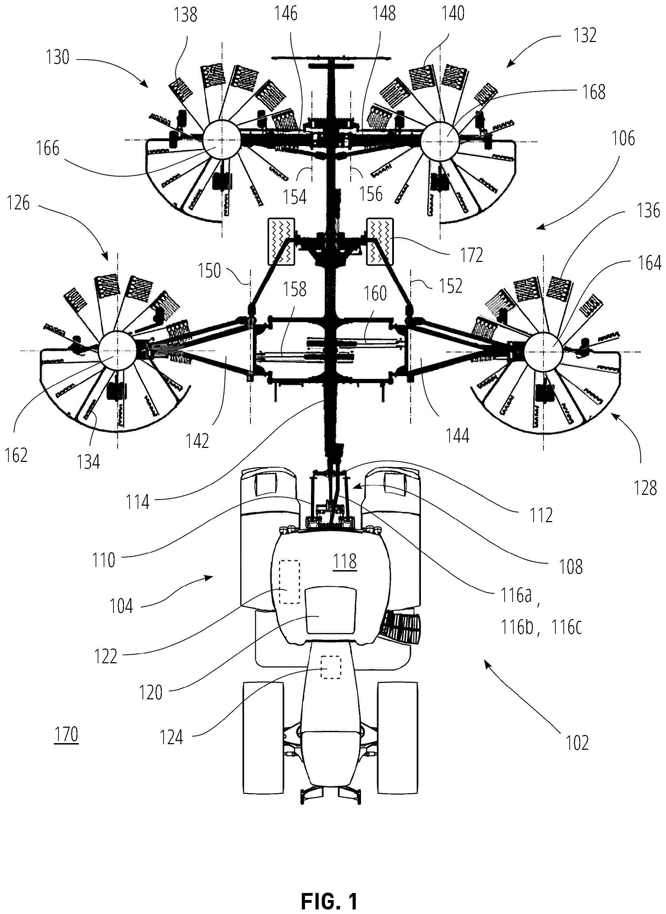

FIG. 1 shows an agricultural machine 102 on an agricultural field 170 from a top view perspective. The agricultural machine 102 comprises a vehicle 104 and an implement 106. The vehicle 104 is an agricultural vehicle such as a tractor, for example. But the vehicle 104 can be of any other type such as a harvester, a combine, a sprayer or any other non-agricultural vehicle such as a truck or a pickup.

A human machine interface 122 for manual control of the agricultural machine 102 and a control unit 124 are integrated in the vehicle 104. A positioning system 120 is attached to a top of a cabin 118 of the vehicle 104. The positioning system 120 comprises an inertial measurement unit (IMU) and/or a global navigation satellite system (GNSS) receiver for determining an absolute position of the agricultural machine 102. The IMU may provide additional orientation information for improving the accuracy of the global pose estimates. The position and time signals received by the positioning system 120 may be based on any GNSS such as GPS, Beidou, Galileo or Glonass signals. Alternatively, the control unit 124 and the positioning system 120 may be attached to other parts of the agricultural machine 102. For example, the control unit 124 and the positioning system 120 could be integrated in the implement 106.

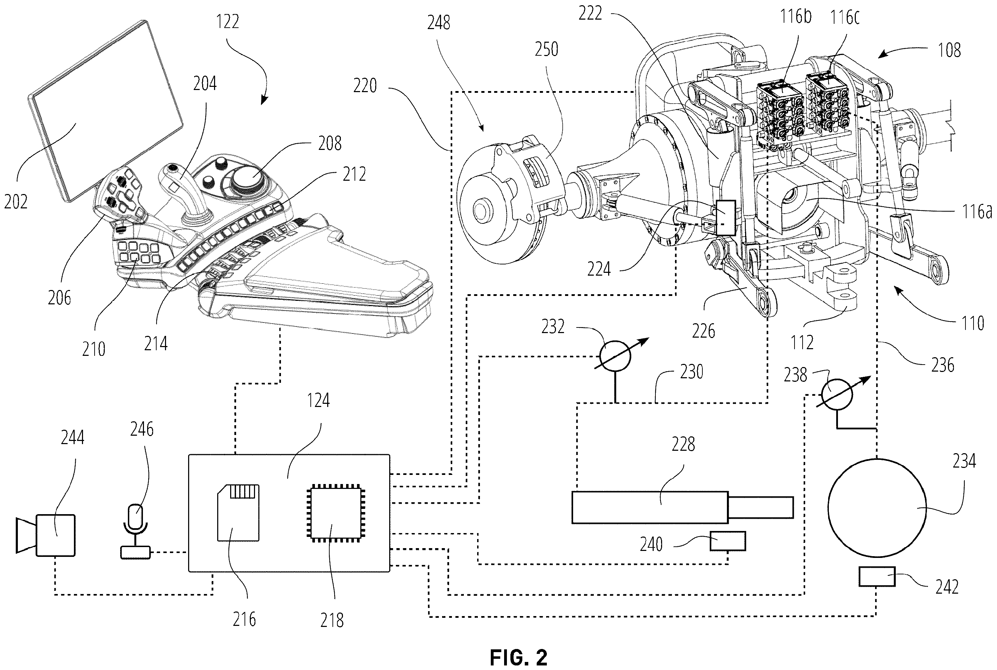

The vehicle 104 comprises a vehicle interface 108 for connecting the implement 106 with the vehicle 104. The vehicle interface 108 is shown in more detail in FIG. 2 and comprises a hitch 110, a coupling 112 and power supplies 116a, 116b, 116c. A chassis member 114 of the implement 106 is connectable to the hitch 110 and/or the coupling 112 for pulling the implement 106 over the agricultural field 170 when the vehicle 104 moves. I. e., the implement 106 and the vehicle 104 may be designed as two separate units releasably connected with each other by the coupling 112. Alternatively, the implement 106 may be integrated in the vehicle 104 to provide a combined unit.

The implement 106 may be of any type as for example a plough, a seeder, a sprayer, a mower, a tedder, a rake, etc. for cultivation of the agricultural field 170. The implement 106 comprises one or more tools 126, 128, 130, 132. The type of the tools depends on the type of the implement. In case of a seeder, the tool may be designed as a seeding unit whereas in case of a sprayer, the tool may be designed as a spraying nozzle. Here by way of example, as can be seen in FIG. 1, the implement 106 is designed as a rake comprising four rake rotors as tools 126, 128, 130 and 132, e. g. such as the implement disclosed in U. S. patent application 2020/0323142 A1, entitled "Agricultural Implement", published on October 14, 2020, which is hereby incorporated by reference in its entirety.

Additionally, the implement 106 comprises a wheel 172, a first tool holder 142 with the first tool 126, a second tool holder 144 with the second tool 128, a third tool holder 146 with the third tool 130 and a fourth tool holder 148 with the fourth tool 132. Each of the first to fourth tools 126, 128, 130, 132 are designed as rake rotors comprising several tines (134, 136, 138, 140). The tines 134, 136, 138, 140 of the first to fourth tools 126, 128, 130, 132 may grab crop such as grass or hay lying on the agricultural field 170 and form the crop to windrows.

The first tool 126 comprises a hub with an integrated revolute joint for a rotational connection about a rotation axis with the first tool holder 142. The first tool holder 142 has a hinge joint 150 for a pivotable connection with the chassis member 114 of the implement 106. I. e., the first tool 126 comprises two different rotational degrees of freedom (first and second degree of freedom). A first rotary actuator 162, integrated in the hub, drives the first tool 126 in the first degree of freedom for a rotational movement about the rotation axis of the hub. A first linear actuator 158 attached between the chassis member 114 and the first tool holder 142 drives the first tool holder 142 for pivoting the first tool holder 142 about the hinge joint 150 so that the first tool 126 is moved in the second degree of freedom.

Analogously, the second tool 128 comprises a hub with an integrated revolute joint for a rotational connection about a rotation axis with the second tool holder 144. The second tool holder 144 has a hinge joint 152 for a pivotable connection with the chassis member 114 of the implement 106. I. e., the second tool 128 comprises two different rotational degrees of freedom. A second rotary actuator 164, integrated in the hub, drives the second tool 128 in the one degree of freedom for a rotational movement about the rotation axis of the hub. A second linear actuator 160 attached between the chassis member 114 and the second tool holder 144 drives the second tool holder 144 for pivoting the second tool holder 144 about the hinge joint 152 so that the second tool 128 is moved in the other degree of freedom.

Analogously, the third tool 130 comprises a hub with an integrated revolute joint for a rotational connection about a rotation axis with the third tool holder 146. The third tool holder 146 has a hinge joint 154 for a pivotable connection with the chassis member 114 of the implement 106. I. e., the third tool 130 comprises two different rotational degrees of freedom. A third rotary actuator 166, integrated in the hub, drives the third tool 130 in the one degree of freedom for a rotational movement about the rotation axis of the hub. A third linear actuator attached between the chassis member 114 and the third tool holder 146 drives the third tool holder 146 for pivoting the third tool holder 146 about the hinge joint 154 so that the third tool 130 is moved in the other degree of freedom.

Analogously, the fourth tool 132 comprises a hub with an integrated revolute joint for a rotational connection about a rotation axis with the fourth tool holder 148. The fourth tool holder 148 has a hinge joint 156 for a pivotable connection with the chassis member 114 of the implement 106. I. e., the fourth tool 132 comprises two different rotational degrees of freedom. A fourth rotary actuator 168, integrated in the hub, drives the fourth tool 132 in the one degree of freedom for a rotational movement about the rotation axis of the hub. A fourth linear actuator attached between the chassis member 114 and the fourth tool holder 148 drives the fourth tool holder 148 for pivoting the fourth tool holder 148 about the hinge joint 156 so that the fourth tool 132 is moved in the other degree of freedom.

Hence, each of the first to fourth tools 126, 128, 130, 132 has two different rotational degrees of freedom for rotating relatively to its corresponding tool holder about a corresponding rotation axis and for pivoting relatively to the chassis member 114 of the implement 106 about a corresponding hinge joint.

The rotary actuators 162, 164, 166 and 168 for rotating the tools 126, 128, 130 and 132 relatively to their tool holders 142, 144, 146 and 148 are of the same type and can be designed as rotational electric motors. But the rotary actuators can be of different type such as rotational hydraulic motors or mechanical drive shafts.

The linear actuators for pivoting the tool holders 142, 144, 146 and 148, e. g. linear actuators 158 and 160, are of the same type and are designed each as a hydraulic cylinder comprising a translational movable piston connected with their corresponding tool holder 142, 144, 146 and 148. I. e., each linear actuator comprises a translational degree of freedom for moving the piston back and forth in the cylinder. When a linear actuator is actuated, its piston moves the corresponding tool holder 142, 144, 146 or 148 so that the translational movement of the piston is transformed into a pivoting movement of the corresponding tool holder 142, 144, 146 or 148 about its corresponding hinge joint 150, 152, 154 or 156 to lower the tool holder 142, 144, 146 or 148 with its tool 126, 128, 130, or 132 in an operational position or to raise the tool holder 142, 144, 146 or 148 with its tool 126, 128, 130, or 132 out of the operational position to bring the tool 126, 128, 130 or 132 out of contact with the agricultural field 170. So, the tools 126, 128, 130 and 132 can be lowered or raised by their tool holders 142, 144, 146 and 148 to be moved in or out of the operational position. In the operational position of the first to fourth tools 126, 128, 130 and 132, the tines of the rake rotors may be brought in engagement with the agricultural field 170 for performing a field operation as forming windrows for example. This position corresponds to an unfolded position of the first to fourth tool holders 142, 144, 146 and 148. Instead, when the first to fourth tools 126, 128, 130 and 132 are positioned out of the operational position, the tines of the rake rotors may be brought out of engagement with the agricultural field 170 for avoiding a field operation by the implement 106. This position corresponds to a folded position of the corresponding tool holders since the width of the implement 106 can be reduced in comparison to the unfolded position.

FIG. 2 shows a control schematic of the agricultural machine 102 comprising the vehicle interface 108, the human machine interface 122, the control unit 124, a linear actuator 228 representing any of the linear actuators (e. g. first linear actuator 158) of the implement 106, a rotary actuator 234 representing any of the rotary actuators (e. g. first rotary actuator 162) of the implement 106, sensors 224, 232, 238, 240, 242, 244 and 246, and a brake 248 comprising a brake actuator 250. Sensor 244 is a sensor configured for environmental perception such as a camera, a LIDAR or a radar for capturing any movement of the implement 106 and/or its tools and/or any surroundings of the implement 106. Sensor 246 is an acoustic sensor such as a microphone for recording any noise, e. g. noise generated by any operation of the implement 106.

The brake 248 may be attached to a drive axle of the vehicle 104 (as shown in FIG. 2) or to the wheel 172 of the implement 106 (see FIG. 1). The brake actuator 250 is configured to apply a brake force on a brake disc to generate a brake torque for decelerating the agricultural machine 102. The brake 248 may be controlled by the human machine interface 122 for applying or releasing the brake 248.

The vehicle interface 108 comprises the hitch 110, the coupling 112, a mechanical power supply 116a designed as a power take-off, also called PTO, a hydraulic power supply 116b and an electrical power supply 116c. The hitch 110 and the power supplies 116a, 116b, 116c may be used to operate the implement 106.

The general principle of a hitch in well known, e. g. from U. S. Patent 6,588,513 B1, entitled "Articulating hitch assembly", filed on June 7, 2000. The hitch 110 may be designed as a 3-point hitch. The hitch 110 is adjustable by a linear actuator 222 to raise or lower a linkage arm 226. The linear actuator 222 may be a hydraulic actuator such as a hydraulic cylinder. Optionally, the linkage arm 226 of the hitch 110 can be adjusted in a horizontal direction. Thus, the implement 106 may be operated by the hitch 110 to adjust the position of the implement 106 in a vertical or horizontal direction in respect of the vehicle 104 when the implement 106 is connected with the hitch 110 via the linkage arm 226. A sensor 224 is attached to the hitch 110 to determine the position and the movement of the linkage arm 226. The sensor signal is transferred to the control unit 124. Alternatively, the implement 106 can be connected with the coupling 112.

Additionally, the power supply 116b can operate the implement 106 for folding or unfolding the tool holders 142, 144, 146 and 148. As can be seen in FIG. 2, the linear actuator 228 representing any one of the linear actuators of the tool holders 142, 144, 146, 148 is connected with the power supply 116b via line 230. The power supply 116b provides a hydraulic fluid to adjust the position of the piston of the linear actuator 222. The corresponding tool holder is folded when the piston is retracted and unfolded if the piston is extracted. A sensor 232 is connected with the line 230 to determine the pressure and/or the fluid flow of the fluid in the line 220. The sensor signal is transferred to the control unit 124. Another sensor 240 is assigned to the linear actuator 228 to determine the position and the movement of the corresponding tool holder. The sensor signal is transferred to the control unit 124. Analogously, all linear actuators of the implement 106 are connectable with and individually operable by the power supply 116b.

The power supply 116c can operate the implement 106 to rotationally drive the tools 126, 128, 130 and 132. The rotary actuator 234 representing any one of the rotary actuators 162, 164, 166, 168 of the tools 126, 128, 130, 132 is connected with the power supply 116c via line 236. The power supply 116c provides electric power to the electric rotary actuator 234 for rotating the corresponding tool, e. g. tool 126. A sensor 238 is connected with the line 236 to determine the current or voltage provided to the rotary actuator 234. The sensor signal is transferred to the control unit 124. Another sensor 242 is assigned to the rotary actuator 234 to determine the position and the movement (e. g. rotational speed) of the corresponding tool. The sensor signal is transferred to the control unit 124. Analogously, all rotary actuators 162, 164, 166, 168 of the implement 106 are connectable with and individually operable by the power supply 116c.

Alternatively, the power supply 116a can operate the implement 106 to rotationally drive the tools 126, 128, 130 and 132. In this case, the rotary actuator 234 representing any one of the rotary actuators 162, 164, 166, 168 of the tools 126, 128, 130, 132 may be connected with the power supply 116a via a mechanical connection for transferring a torque. The rotary actuator 234 may comprise a gear to transform the torque into a rotational movement of the tool.

Each of the sensors 224, 232, 238, 240, 242, 244, 246 is configured to detect an impact due to a collision against an end stop of the vehicle interface 108, a collision against an end stop of the actuators 222, 228, 234 or the implement 106 hitting the agricultural field 170. For example, a noise caused by a collision against an end stop or hitting the agricultural field 170 can be sensed by the acoustic sensor 246. The images captured by the environmental perception sensor 244 can be analyzed to detect any collision. When a linear actuator 222 of the vehicle interface 108 or any actuator 228, 234 of the implement 106 moves unbraked towards an end stop of the actuator itself or the implement 106, the sensors 224 or 240 can determine a collision against the end stop of the corresponding actuator or the implement 106. For example, the end stop of a linear actuator is reached if the moving part of the linear actuator, e. g. the piston of a hydraulic cylinder, has been fully extracted. Additionally, sensor 232 may detect a pressure impulse in the line 230 or sensor 242 may detect a voltage peak of the electric current in line 236 due to the collision.

Each movement of any of the afore mentioned actuators is controlled by the control unit 124. The control unit 124 is connected with the vehicle interface 108 by a line 220 to send control signals for controlling the linear actuator 222, the brake actuator 250 and the power supplies 116a, 116b, 116c. For example, the control unit 124 may control the fluid flow of the hydraulic power supply 116b to control linear actuator 228 or the voltage of electrical power supply 116c to control the rotary actuator 234. The control unit 124 may also control the torque or the rotational speed provided by the mechanical power supply 116a. The sensors 244 and 246 are also connected with the control unit 124 and may provide additional sensor signals for controlling the actuators. Hence, the position and the speed of each actuator can be adjusted by the control unit 124. For example, the control unit 124 may adjust the control signals to reduce a deviation between the control signals and the sensor signals received from the sensors 224, 232, 238, 240, 242, 244, 246.

The human machine interface 122 comprises a display 202 and several input devices as a joystick 204, a lever 206, a knob 208, buttons 210, buttons 212 and a rocker 214. Each input device can be manually operated by an operator to control individually any actuator of the vehicle 104, the vehicle interface 108 and the implement 106. For example, the vehicle 104 can be steered, accelerated and braked by the joystick 204, the linear actuator 222 can be controlled by the rocker 214, the linear actuator 228 can be controlled by the lever 206 and the rotary actuator 234 can be controlled by the knob 208. The buttons 210, 212 can be used to switch between the linear and rotary actuators of the implement 106 or to move an actuator to a predefined position, e. g. for folding or unfolding the tool holders 142, 144, 146 and 148 of the implement 106. When the joystick 204 is manipulated for braking the agricultural machine 102, the brake actuator 250 is controlled by the joystick 204.

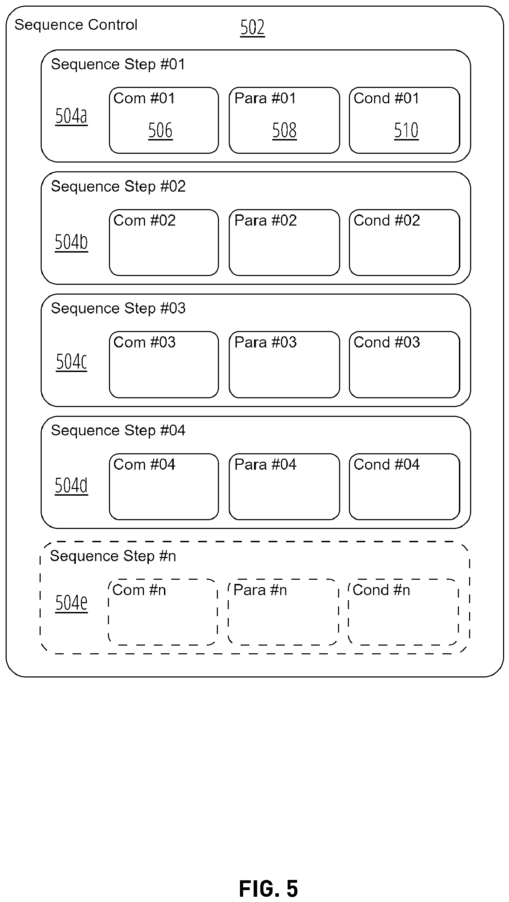

The human machine interface 122 can also be used to record one or more sequence steps 504a to 504e of a sequence control 502 as exemplarily shown in FIG. 5 or to initiate an execution of recorded sequence steps 504a to 504e of the sequence control 502. One of the buttons 210 or 212 is configured to (de-)activate a learn mode of the sequence control 502 for recording of sequence steps, another one is configured to (de-)activate a replay mode for executing recorded sequence steps 504a to 504e.

The human machine interface 122 is connected with the control unit 124 to exchange signals. The human machine interface 122 generates signals according to the manual operation of the input devices and sends the signals to the control unit 124. The control unit 124 may send any information to the human machine interface 122 to be shown on the display 202, for example to show whether the learn mode or the replay mode of the sequence control 502 is activated.

The control unit 124 comprises a controller 218 and a memory 216. The control unit 124 may receive and send signals or data via an I/O interface. The I/O interface may be a wireless interface or a connector for connecting a line, such as line 220. The received sensor signals may be transferred from the positioning system 120, the human machine interface 122 and the sensors 224, 232, 238, 240, 242, 244 and 246. The controller 218 may store the data or signals received by the control unit 124 in the memory 216. The memory 216 may contain additional data or executable computer program products, for example in terms of a computer-implemented method, that may be retrieved, processed or executed by the controller 218. Recorded sequence steps 504a to 504e of the sequence control 502 can also be stored in the memory 216 and may be called up by the controller 218 for executing them. Data or signals resulting from the processing of data or signals or from the execution of a computer program product may be stored in the memory 216 or sent to the I/O interface by the controller 218.

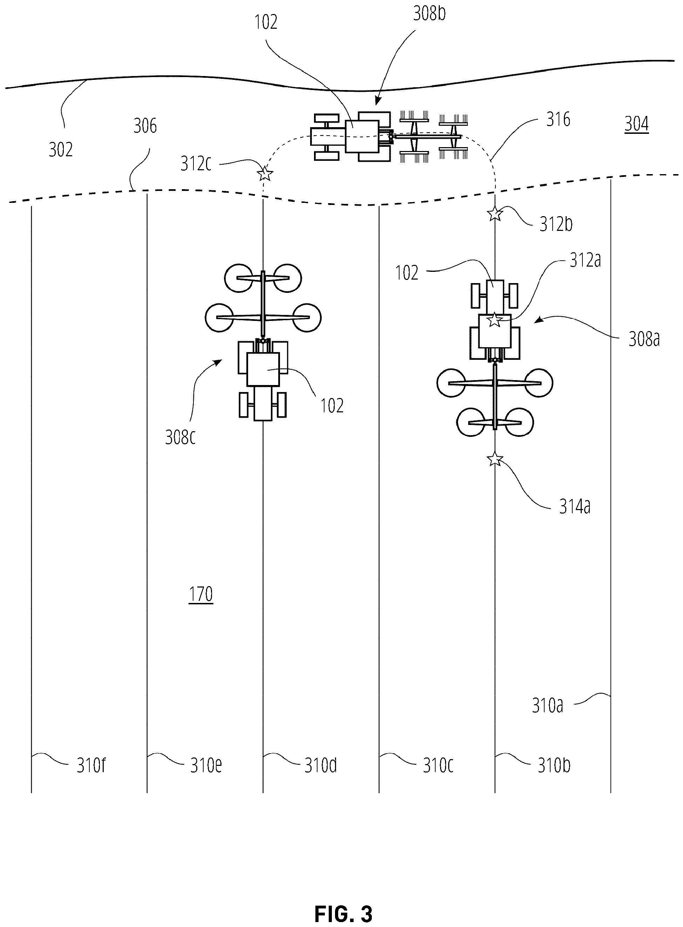

FIG. 3 illustrates schematically an agricultural machine 102 in an agricultural field 170 while recording or executing one or more sequence steps 504a to 504e of a sequence control 502. The agricultural machine 102 can be autonomously guided along different paths 310a to 310f for traversing the agricultural field 170. The paths 310a to 310f are stored in the memory 216 of the control unit 124. The positioning system 120 of the agricultural machine 102 receives the current position of the agricultural machine 102 from the GNSS and checks whether the agricultural machine 102 deviates from its path to be guided along. If so, the control unit 124 initiates a corrective steering action to hold the agricultural machine 102 on its path. When the agricultural machine 102 approaches an end of its path near to a field boundary 302 of the agricultural field 170, the agricultural machine 102 may turn in a headland 304 of the agricultural field 170 zoned by a headland boundary 306 and continue traversing the agricultural field 170 along another path. If the turning radius of the agricultural machine 102 is too great for directly driving in a subsequent path, e. g. path 310c, the agricultural machine 102 may automatically skip that path.

During a field operation, the implement 106 of the agricultural machine 102 is in the unfolded position as indicated by the agricultural machine 102 at a first position 308a and a third position 308c. But the implement 106 may be positioned in the folded position as indicated by the agricultural machine 102 at a second position 308b when turning in the headland 304 since a field operation is not needed or unwanted in the headland 304.

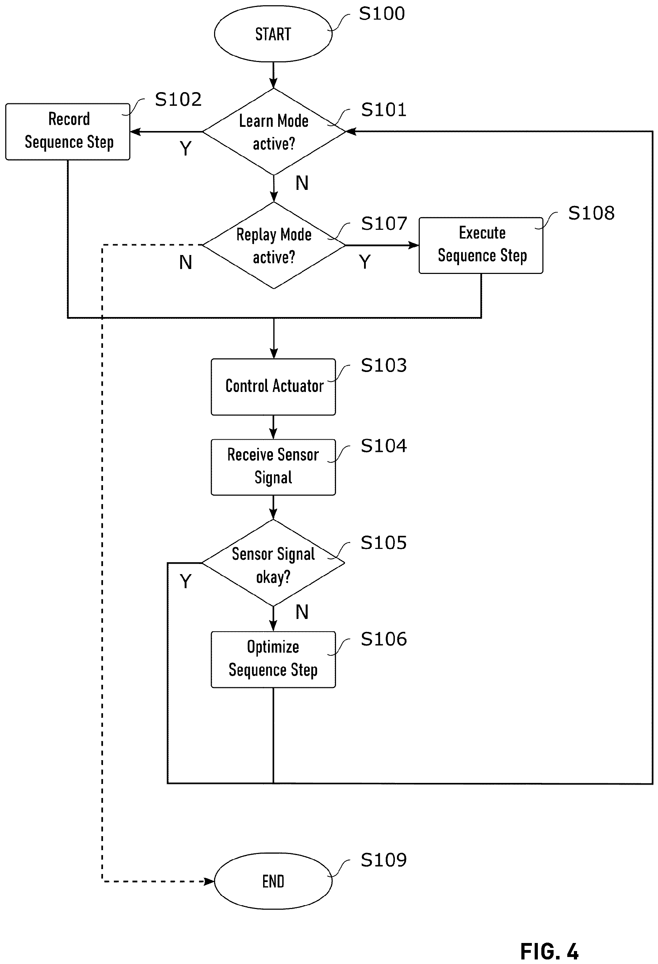

FIG. 4 shows a flow chart of a method for recording and/or executing the sequence control 502. The method may be at least partly a computer-implemented method stored as a computer program product in the memory 216 of the control unit 124. The control unit 124 is configured to carry out the method. Computer-implemented parts of the method may be executed by the controller 218 of the control unit 124. Non-computer-implemented parts of the method may be executed manually or by other components of the system. The method is described by way of example of several steps without any restriction in respect of that steps. I. e. the number or the order of steps may be adapted, for example single steps may be excluded and/or added and executed earlier or later than described.

The method may be started by an operator for recording one or more sequence steps 504a to 504e of the sequence control 502 or for initiating an execution of a recorded sequence control 502 (step S100). The method proceeds to step S101 and the control unit 124 checks whether a learn mode of the sequence control 502 is active. The learn mode may have been activated by the operator pressing a corresponding button of the human machine interface 122. If the learn mode is active, the method proceeds to step S102 for recording a sequence step 504a to 504e. Otherwise, the method proceeds to step S107.

As shown in FIG. 3, the agricultural machine 102 moves along path 310b towards the headland 304. It is assumed now, that the learn mode has been activated by the operator and that the agricultural machine 102 has arrived a first position 308a that corresponds to a first waypoint 312a. At this position, the operator of the agricultural machine 102 starts manipulating the human machine interface 122 for manually executing a sequence of four different operations of the agricultural machine 102 before entering the headland 304. For example, the operator of the agricultural machine 102 may manipulate the human machine interface 122 to
- apply brake actuator 250 to slow down the vehicle 104 to a specific speed value at a first waypoint 312a (first operation),
- control the linear actuator 222 of the vehicle interface 108 to raise the implement 106 at a second waypoint 312b (second operation),
- control rotary actuators 162, 164, 166 and 168 to slow down rotational movement of the tools 126, 128, 130 and 132 to standstill (third operation),
- control linear actuators 158, 160 of the implement 106 to fold the implement 106 (fourth operation).

Then, the operator drives the agricultural machine 102 into the headland 304 and turns it along turning path 316 in the headland 304 as illustrated by the second position 308b of the agricultural machine 102 while the implement 106 is in the folded position. Before leaving the headland 304 for traversing the agricultural field 170 along path 310d, the operator drives the agricultural machine 102 to a third waypoint 312c and manipulates the human machine interface 122 again for manually executing additional operations of the agricultural machine 102, as for example
- control linear actuators 158, 160 of the implement 106 to unfold the implement 106 (fifth operation).

In response to the manipulation of the human machine interface 122, the control unit 124 will record several sequence steps 504a to 504e of the sequence control 502 (see FIG. 5). The control unit 124 records as many sequence steps 504a to 504e as required. Sequence step 504a is the first sequence step of the sequence control 502, sequence step 504b the second sequence step and so on. FIG. 5 shows exemplarily five sequence steps but the number may be higher or lower. Accordingly, sequence step 504e represents exemplarily a plurality of sequence steps including the last sequence step of the sequence control 502. Each sequence step 504a to 504e comprises a command 506 and optionally a parameter 508 assigned to the command 506 to quantify the command 506 and/or a condition 510 to trigger the command 506 (see FIG. 5).

Due to the activation of the learn mode, the method has proceeded to step S102. In response to the manipulation of the human machine interface 122 for the first operation, the control unit 124 records the first sequence step 504a. The control unit 124 defines the slowing down of the vehicle 104 by applying the brake actuator 250 as the command 506 of the first sequence step 504a, the specific speed value to which the vehicle 104 has been slowed down, the deceleration (brake force) and the duration of the brake actuation as parameters 508 of the first sequence step 504a and the first waypoint 312a at which the slowing down of the vehicle 104 was initiated by the operator as condition 510 of the first sequence step 504a. The first sequence step 504a is stored in the memory 216.

The method proceeds to step S103 and the control unit 124 applies the brake actuator 250 according to the manual manipulation of the human machine interface 122 for slowing down the agricultural machine 102 to the specific speed value by applying a specific brake force as long as demanded by the operator. The vehicle 104 is decelerated accordingly. Depending on the deceleration, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246. The at least one signal may be a positional signal representing the current position of one of the actuators for operating the implement 106 such as the linear actuator 222, the linear actuator 228 or the rotary actuator 234. The at least one signal may be a signal representing a movement such as a speed or an acceleration of one of the actuators 222, 228 or 234 for operating the implement 106. The at least one signal may be a strain signal representing a force or torque provided to the implement 106, e. g. via the power supply 116a. The at least one sensor signal may represent any movement, force, torque, impulse or acceleration of the implement 106 that may be caused by an external effect such as a collision of the implement 106 with an obstacle. The at least one signal may be a pressure signal representing a pressure or a pulsation of a fluid provided to the implement 106, e. g. via the power supply 116b. The at least one signal may be an electrical signal representing a voltage or a current strength of a current provided to the implement 106, e. g. via the power supply 116c. The at least one signal may be an acoustic signal, e. g. a noise caused by the implement 106, that is determined by the acoustic sensor 246. Alternatively, the at least one signal may be an optical signal such as images of the implement 106 or an element of the implement 106, captured by the sensor 224, for determining an operational condition of the implement 106 such as the position of one of the actuators 222, 228 or 234 for operating the implement 106. The control unit 124 may receive at least one sensor signal of a different type than mentioned above and may receive two or more sensor signals.

The method proceeds to step S105 and the control unit 124 compares the at least one sensor signal with a reference value for determining a poor operation of the implement 106 in response to the controlling of the brake actuator 250 according to the command of the first sequence step 504a. The reference value is a predefined threshold stored in the memory 216. Each different sensor signal may be compared with a separate reference value. When the at least one sensor signal exceeds the reference value, the control unit 124 determines a poor operation of the implement 106. The poor operation of the implement 106 may be a consequence of a maloperation of the agricultural machine 102 by the operator or an excessive operation of the implement 106, for example. Alternatively, the poor operation of the implement may be a consequence of an automatic execution of a sequence step comprising poorly defined command, parameters and/or conditions. The poor operation of the implement 106 may comprise an impact due to a collision against an end stop of the vehicle interface 108 or an actuator of the implement 106, or an impact due to the implement 106 hitting the agricultural field 170 wherein the impact is detectable by the at least one sensor. Hence, a poor operation of the implement 106 can be determined by the control unit 124 if the impact is too strong and causes the exceedance of the reference value. For example, the impact may cause a rise of the pressure in the line 230 exceeding a pressure reference value, a voltage peak of the electric current induced by the electric actuator and transmitted in the line 236 exceeding a voltage reference value and/or vibrations of mechanical parts of the vehicle interface 108 or the implement 106 exceeding an acceleration or a pulsation reference value, etc. The impact may cause an acoustic noise exceeding a volume threshold within an acoustic frequency band representative for noises caused by an implement 106 hitting the agricultural field 170 or a collision against an end stop of the vehicle interface 108 or the implement 106. The impact may also induce unintentional forces or torques into parts of the vehicle interface 108 or the implement 106, such as structural elements for example, exceeding a strain reference value.

As mentioned above, the first sequence step 504a is derived from the first operation of the agricultural machine 102 for applying the brake actuator 250 to slow down the vehicle 104 to a specific speed value at a first waypoint 312a. Depending on how aggressive the agricultural machine 102 has been decelerated by the manual brake operation of the operator, one of the sensor signals may exceed a threshold and indicate a poor operation of the implement 106. For example, the excessive braking of the agricultural machine 102 may cause unwanted impacts such as vibrations of the implement 106 (generating noise) detectable by the pressure sensor 232, the acoustic sensor 246 or the environmental perception sensor 244. Further impacts may be unwanted stress on the vehicle interface 108 caused by the vibrations that are detectable by the sensor 224. The control unit 124 receives the corresponding sensor signals and determines whether one of the sensor signals exceeds a corresponding reference value. If not (i. e. sensor signal is okay), the method steps back to step S101. Otherwise, the method proceeds to step S106.

At step S106, the control unit 124 optimizes the first sequence step 504a. The control unit 124 may process predefined rules or stored in the memory 216 for improving the sequence step. Optionally, the control unit 124 may improve the sequence step by means of a neuronal network or other algorithms used for artificial intelligence (Al) applications. Due to the exceedance of the reference value caused by the excessive manual braking (maloperation of the operator), the control unit 124 adjusts the parameter 508 defining the brake force assigned to the command 506 of the first sequence step 504a to reduce the impact. For example, the control unit 124 adjusts the parameter 508 by reducing the brake force by a predefined value, e. g. 10%. The parameter 508 may be adjusted in dependence of the level of exceedance of the reference value. I. e., the more the reference value has been exceeded, the more is the brake force reduced. Alternatively, the parameter 508 can be set to a predefined maximum allowable brake force value.

The control unit 124 may also take into account that the reduction of the brake force increases the stopping distance of the agricultural machine 102 so that the agricultural machine 102 may drive too fast when entering the headland 304. Thus, the control unit 124 adjusts additionally the condition 510 defining the position for initiating the command 506 of the first sequence step 504a to define waypoint 314a instead of the previously defined first waypoint 312a as condition 510 of the first sequence step 504a (see FIG. 3). As can be seen in FIG. 3, waypoint 314a defines a position enabling an earlier initiation of the command 506 of the first sequence step 504a compared to the first waypoint 312a when the agricultural machine 102 is guided along the path 310b so that the increased stopping distance due to the adjustment of the parameter 508 defining the reduced brake force can be compensated. Then, the control unit 124 generates a notice to be displayed on the human machine interface 122 to inform the operator about the adjustments. The operator may refine, accept or decline the adjustments. If accepted, the optimized first sequence step 504a comprising the adjusted parameter and condition is stored in the memory 216 of the control unit 124. After the optimization of the sequence step, the method steps back to step S101.

The learn mode is still active so that the method proceeds to step S102 for recording a further sequence step of the sequence control 502. In response to the manipulation of the human machine interface 122 for the second operation, the control unit 124 records the second sequence step 504b. The control unit 124 defines the raising of the implement 106 by means of the linear actuator 222 of the vehicle interface 108 as command 506 of the second sequence step 504b, the position to which the implement 106 has been raised as parameter 508 of the second sequence step 504b and the second waypoint 312b at which the raising of the implement 106 was initiated by the operator as condition 510 of the second sequence step 504b. The second sequence step 504b is stored in the memory 216.

The method proceeds to step S103 and the control unit 124 controls the linear actuator 222 of the vehicle interface 108 according to the manual manipulation of the human machine interface 122 to raise the implement 106. The linear actuator 222 lifts the linkage arm 226 until the implement 106 reaches the position defined by the parameter 508 of the second sequence step 504b. Depending on the raising of the implement 106, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the first sequence step 504a.

The method proceeds to step S105 and the control unit 124 compares the at least one sensor signal with a reference value for determining a poor operation of the implement 106 in response to the controlling of the linear actuator 222 according to the command of the second sequence step 504b. Depending on how jerky the vehicle interface 108, or rather the hitch 110, has been controlled by the manual operation of the operator, one of the sensor signals may exceed a threshold and indicate a poor operation of the implement 106.

For example, the operator may had stopped the actuation of the vehicle interface 108 too late so that the vehicle interface 108 or the linear actuator 222 collided against an end stop causing unwanted impacts such as the collision itself (generating noise), unwanted stress on the vehicle interface 108 or vibrations of the vehicle interface 108 or the implement 106 detectable by the sensor 224, the acoustic sensor 246 or the environmental perception sensor 244. The control unit 124 receives the corresponding sensor signals and determines whether one of the sensor signals exceeds a corresponding reference value. If not (i. e. sensor signal is okay), the method steps back to step S101. Otherwise, the method proceeds to step S106.

At step S106, the control unit 124 optimizes the sequence step 504a. Due to the exceedance of the reference value caused by a maloperation of the operator, the control unit 124 adjusts the parameter 508 of the second sequence step 504b defining the position to which the implement 106 has been raised to reduce the impact. For example, the control unit 124 adjusts the parameter 508 by defining a position being more distant from the end stop of the vehicle interface 108 or the linear actuator 222 so that a collision with the end stop can be avoided. The parameter 508 may be set to a predefined maximum allowable position (i. e. closest position to the end stop without causing an impact). Alternatively, the parameter 508 may be adjusted in dependence of the level of exceedance of the reference value. I. e., the more the reference value has been exceeded, the more distant position from the end stop is defined. The control unit 124 may retain the condition 510 of the second sequence step 504b since the adjustment of the parameter 508 of the second sequence step 504b may not cause any negative effect of the operation of the agricultural machine 102. So, the second waypoint 312b is not changed. Then, the control unit 124 generates a notice to be displayed on the human machine interface 122 to inform the operator about the adjustments. The operator may refine, accept or decline the adjustments. If accepted, the optimized second sequence step 504b comprising the adjusted parameter is stored in the memory 216 of the control unit 124. After the optimization of the sequence step, the method steps back again to step S101.

The learn mode is still active so that the method proceeds to step S102 for recording a further sequence step of the sequence control 502. In response to the manipulation of the human machine interface 122 for the third operation, the control unit 124 records the third sequence step 504c. The control unit 124 defines controlling the rotary actuators 162, 164, 166 and 168 for slowing down of the rotational movement of the tools 126, 128, 130 and 132 as command 506 of the third sequence step 504c, the value zero representing a standstill and a deceleration value as parameters 508 of the third sequence step 504c and the time delay between the two manipulations of the human machine interface 122 for the second and third operation as condition 510 of the third sequence step 504c. The third sequence step 504c is stored in the memory 216.

The method proceeds to step S103 and the control unit 124 controls the rotary actuators 162, 164, 166 and 168 according to the manual manipulation of the human machine interface 122 for decelerating the rotational movement of the tools 126, 128, 130 and 132 to standstill. Depending on the deceleration, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the first sequence step 504a.

The method proceeds to step S105 and the control unit 124 compares the at least one sensor signal with a reference value for determining a poor operation of the implement 106 in response to the controlling of the rotary actuators 162, 164, 166 and 168 according to the command of the third sequence step 504c. Depending on how aggressive the rotary actuators 162, 164, 166 and 168 have been decelerated by the manual operation of the operator, one of the sensor signals may exceed a threshold and indicate a poor operation of the implement 106.

For example, an excessive deceleration of the rotary actuators 162, 164, 166 and 168 may cause unwanted impacts such as vibrations of the implement 106 (generating noise) detectable by the pressure sensor 232, the sensor 238, the acoustic sensor 246 or the environmental perception sensor 244. Further impacts may be unwanted stress on the vehicle interface 108 caused by the vibrations that are detectable by the sensor 224. The control unit 124 receives the corresponding sensor signals and determines whether one of the sensor signals exceeds a corresponding reference value. If not (i. e. sensor signal is okay), the method steps back to step S101. Otherwise, the method proceeds to step S106.

At step S106, the control unit 124 optimizes the sequence step 504a. Due to the exceedance of the reference value caused by the excessive deceleration of the tools 126, 128, 130, 132 (maloperation of the operator), the control unit 124 adjusts the parameter 508 defining the deceleration value assigned to the command 506 of the third sequence step 504c to reduce the impact. For example, the control unit 124 adjusts the parameter 508 by reducing the deceleration value by a predefined value, e. g. 10%. The parameter 508 may be adjusted in dependence of the level of exceedance of the reference value. I. e., the more the reference value has been exceeded, the more is the deceleration value reduced. Alternatively, the parameter 508 can be set to a predefined maximum allowable deceleration value. The control unit 124 may retain the condition 510 of the third sequence step 504c since the adjustment of the parameter 508 of the third sequence step 504c may not cause any negative effect of the operation of the agricultural machine 102. Then, the control unit 124 generates a notice to be displayed on the human machine interface 122 to inform the operator about the adjustments. The operator may refine, accept or decline the adjustments. If accepted, the optimized third sequence step 504c comprising the adjusted parameter is stored in the memory 216 of the control unit 124. After the optimization of the sequence step, the method steps back again to step S101.

The learn mode is still active so that the method proceeds to step S102 for recording the fourth sequence step of the sequence control 502. In response to the manipulation of the human machine interface 122 for the fourth operation, the control unit 124 records the fourth sequence step 504d. The control unit 124 defines controlling the linear actuators (158, 160) of the implement 106 for folding of the implement 106 as command 506 of the fourth sequence step 504d, the positions to which the tool holders 142, 144, 146 and 148 have been pivoted about their corresponding hinge joints 150, 152, 154 and 156 as parameters 508 of the fourth sequence step 504d and the time delay between the two manipulations of the human machine interface 122 for the third and fourth operation as condition 510 of the fourth sequence step 504d. The fourth sequence step 504d is stored in the memory 216.

The method proceeds to step S103 and the control unit 124 controls the linear actuators 158 and 160 according to the manual manipulation of the human machine interface 122 to fold the implement 106. The linear actuators 158 and 160 raise the tool holders 142 and 144 by a pivotal about the hinge joints 150 and 152. The tool holders 146 and 148 are analogously raised and pivoted about the hinge joints 154 and 156, too. The tool holders 142, 144, 146 and 148 are pivoted until the fully folded position has been reached. Depending on the folding of the implement 106, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the first sequence step 504a.

The method proceeds to step S105 and the control unit 124 compares the at least one sensor signal with a reference value for determining a poor operation of the implement 106 in response to the controlling of the linear actuators 158 and 160 according to the command of the fourth sequence step 504d. Depending on how jerky the linear actuators 158, 160 have been controlled by the manual operation of the operator, one of the sensor signals may exceed a threshold and indicate a poor operation of the implement 106.

For example, the operator may had stopped the folding of the tool holders 142 or 144 too late so that the tool holders or the linear actuator 158 or 160 collided against an end stop causing unwanted impacts such as the collision itself (generating noise), unwanted stress on the vehicle interface 108 or vibrations of the vehicle interface 108 or the implement 106 detectable by the sensor 224, the sensor 232, the sensor 240, the acoustic sensor 246 or the environmental perception sensor 244. The control unit 124 receives the corresponding sensor signals and determines whether one of the sensor signals exceeds a corresponding reference value. If not (i. e. sensor signal is okay), the method steps back to step S101. Otherwise, the method proceeds to step S106.

At step S106, the control unit 124 optimizes the fourth sequence step 504d. Due to the exceedance of the reference value caused by a maloperation of the operator, the control unit 124 adjusts the parameters 508 of the fourth sequence step 504d defining the positions to which the tool holders 142, 144, 146 and 148 have been pivoted about their corresponding hinge joints 150, 152, 154 and 156 to reduce the impact. For example, the control unit 124 adjusts the parameters 508 by defining positions for each tool holder 142, 144, 146 and 148 being more distant from the end stops of the corresponding linear actuators so that a collision with the end stops can be avoided. The parameters 508 may be set to a predefined maximum allowable position (i. e. closest position to the end stops without causing an impact). Alternatively, the parameter 508 may be adjusted in dependence of the level of exceedance of the reference value. I. e., the more the reference value has been exceeded, the more distant position from the end stop is defined. The control unit 124 may retain the condition 510 of the fourth sequence step 504d since the adjustment of the parameters 508 of the fourth sequence step 504d may not cause any negative effect of the operation of the agricultural machine 102. Then, the control unit 124 generates a notice to be displayed on the human machine interface 122 to inform the operator about the adjustments. The operator may refine, accept or decline the adjustments. If accepted, the optimized fourth sequence step 504d comprising the adjusted parameter is stored in the memory 216 of the control unit 124. After the optimization of the sequence step, the method steps back again to step S101.

The learn mode is still active so that the method proceeds to step S102 for recording the fifth sequence step of the sequence control 502. In response to the manipulation of the human machine interface 122 for the fifth operation, the control unit 124 records the fifth sequence step 504e. The control unit 124 defines controlling the linear actuators (158, 160) of the implement 106 for unfolding of the implement 106 as command 506 of the fifth sequence step 504e, the positions to which the tool holders 142, 144, 146 and 148 have been pivoted about their corresponding hinge joints 150, 152, 154 and 156 as parameters 508 of the fifth sequence step 504e and the third waypoint 312c at which the unfolding of the implement 106 was initiated by the operator as condition 510 of the fifth sequence step 504e. The fifth sequence step 504e is stored in the memory 216.

The method proceeds to step S103 and the control unit 124 controls the linear actuators 158 and 160 according to the manual manipulation of the human machine interface 122 to unfold the implement 106. The linear actuators 158 and 160 lower the tool holders 142 and 144 by a pivotal movement about the hinge joints 150 and 152. The tool holders 146 and 148 are analogously lowered and pivoted about the hinge joints 154 and 156, too. The tool holders 142, 144, 146 and 148 are pivoted until the fully unfolded position has been reached. Depending on the unfolding of the implement 106, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the first sequence step 504a.

The method proceeds to step S105 and the control unit 124 compares the at least one sensor signal with a reference value for determining a poor operation of the implement 106 in response to the controlling of the linear actuators 158 and 160 according to the command of the fifth sequence step 504d. Depending on how jerky the linear actuators 158, 160 have been controlled by the manual operation of the operator, one of the sensor signals may exceed a threshold and indicate a poor operation of the implement 106.

For example, the operator may had stopped the unfolding of the tool holders 142 or 144 too late so that the linear actuator 158 or 160 collided against an end stop or the tools 126, 128, 130 or 132 of the implement 106 hit the agricultural field 170. All these collisions (against the end stops or the agricultural field 170) may cause unwanted impacts such as the collision itself (generating noise), unwanted stress on the vehicle interface 108 or vibrations of the vehicle interface 108 or the implement 106 detectable by the sensor 224, the sensor 232, the sensor 240, the acoustic sensor 246 or the environmental perception sensor 244. The control unit 124 receives the corresponding sensor signals and determines whether one of the sensor signals exceeds a corresponding reference value. If not (i. e. sensor signal is okay), the method steps back to step S101. Otherwise, the method proceeds to step S106.

At step S106, the control unit 124 optimizes the fifth sequence step 504e. Due to the exceedance of the reference value caused by a maloperation of the operator, the control unit 124 adjusts the parameters 508 of the fifth sequence step 504e defining the positions to which the tool holders 142, 144, 146 and 148 have been pivoted about their corresponding hinge joints 150, 152, 154 and 156 to reduce the impact. For example, the control unit 124 adjusts the parameters 508 by defining positions for each tool holder 142, 144, 146 and 148 being more distant from the end stops of the corresponding linear actuators so that a collision with the end stops can be avoided. Alternatively, the control unit 124 adjusts the parameters 508 by defining positions for each tool holder 142, 144, 146 and 148 providing a clearance between the agricultural field 170 and the tools 126, 128, 130 and 132 to avoid a collision of the tools 126, 128, 130 and 132 with the agricultural field 170. The parameters 508 may be set to a predefined maximum allowable position (i. e. closest position to the end stops without causing an impact). Alternatively, the parameter 508 may be adjusted in dependence of the level of exceedance of the reference value. I. e., the more the reference value has been exceeded, the more distant position from the end stop is defined. The control unit 124 may retain the condition 510 of the fifth sequence step 504d since the adjustment of the parameters 508 of the fifth sequence step 504d may not cause any negative effect of the operation of the agricultural machine 102. Then, the control unit 124 generates a notice to be displayed on the human machine interface 122 to inform the operator about the adjustments. The operator may refine, accept or decline the adjustments. If accepted, the optimized fourth sequence step 504d comprising the adjusted parameter is stored in the memory 216 of the control unit 124. After the optimization of the sequence step, the method steps back again to step S101.

The operator may record additional sequence steps in an analogous manner as described above such as accelerating the tools 126, 128, 130 and 132 and lowering the implement 106 by the hitch 110. But for reasons of simplicity, it is assumed now that the operator deactivates the learn mode. So, the fifth sequence step 504e exemplarily represents the last sequence step of the sequence control 502.

Due to the deactivated learn mode, the method proceeds to step S107 and the control unit 124 checks whether the replay mode has been activated. If the replay mode is active, the method proceeds to step S108 for executing the recorded and eventually optimized sequence steps 504a to 504e of the sequence control 502. Otherwise, the method proceeds to step S109 and ends. Now, the operator may have activated the replay mode of the sequence control 502 and drive the agricultural machine 102 along path 310b again. Thus, the method proceeds to step S108.

While the agricultural machine 102 is guided along the path 310b, the control unit 124 checks whether the condition 510 of the first sequence step 504a is fulfilled. According to the optimized first sequence step 504a, the command 506 of the sequence step 504a will be triggered by the control unit 124 when the agricultural machine 102 has reached the waypoint 314a. The control unit 124 receives the current position of the agricultural machine 102 from the positioning system 120 and compares the current position with the position of the waypoint 314a. When the agricultural machine 102 has approached the waypoint 314a close enough, the condition 510 of the optimized first sequence step 504a is deemed to be fulfilled by the control unit 124. Then, the method proceeds to step S103 for controlling the corresponding actuator under consideration of the command 506 and the parameter 508 of the optimized first sequence step 504a.

The control unit 124 receives the command 506 and the parameter 508 of the optimized first sequence step 504a from the memory 216 and applies the brake actuator 250 for slowing down the agricultural machine 102 to the specific speed value by applying a specific brake force as long as defined by the parameter 508. The vehicle 104 is decelerated accordingly. Depending on the deceleration, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the recording of the first sequence step 504a.

The method proceeds to step S105 and the control unit 124 compares the at least one sensor signal with a reference value for determining a poor operation of the implement 106 analogously as described above in the context of the recording of the first sequence step 504a. Depending on how aggressive the agricultural machine 102 has been decelerated by the execution of the first sequence step 504a, one of the sensor signals may exceed a threshold and indicate a poor operation of the implement 106. The control unit 124 determines whether one of the sensor signals exceeds a corresponding reference value. If not (i. e. sensor signal is okay), the method steps back to step S101. Otherwise, the method proceeds to step S106.

At step S106, the control unit 124 optimizes the first sequence step 504a analogously as described above in the context of the recording of the first sequence step 504a. If an optimization of the sequence step during the recording of the sequence step was not sufficient, the sequence step may be optimized again. After the optimization of the sequence step, the method steps back again to step S101.

The learn mode is still inactive whereas the replay mode is still active so that the method proceeds to step S108 for executing the next (optimized) sequence step of the sequence control 502. While moving along the path 310b, the agricultural machine 102 passes waypoint 314a and will arrive the first waypoint 312a. Since neither the second nor any other sequence step 504a to 504e of the optimized sequence control 502 comprises a condition 510 for executing a command at the first waypoint 312a, the agricultural machine 102 passes the first waypoint 312a without triggering any sequence step by the control unit 124. Moving forward, the agricultural machine 102 approaches the headland 304. The control unit 124 checks whether the condition 510 of the second sequence step 504b is fulfilled. According to the optimized second sequence step 504b, the command 506 of the sequence step 504b will be triggered by the control unit 124 when the agricultural machine 102 has reached the second waypoint 312b. The control unit 124 receives the current position of the agricultural machine 102 from the positioning system 120 and compares the current position with the position of the second waypoint 312b. When the agricultural machine 102 has approached the second waypoint 312b close enough, the condition 510 of the optimized second sequence step 504b is deemed to be fulfilled by the control unit 124.

Then, the method proceeds to step S103 for controlling the corresponding actuator under consideration of the command 506 and the parameter 508 of the (optimized) second sequence step 504b. The control unit 124 receives the command 506 and the parameter 508 of the (optimized) second sequence step 504b from the memory 216 and controls the linear actuator 222 of the vehicle interface 108 to raise the implement 106 to the position as defined by the parameter 508. The vehicle interface 108, or rather the hitch 110, is lifted accordingly. Depending on the raising of the implement 106, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the recording of the first sequence step 504a.

The method proceeds to step S105 and the control unit 124 compares the at least one sensor signal with a reference value for determining a poor operation of the implement 106 analogously as described above in the context of the recording of the second sequence step 504b. Depending on how jerky the vehicle interface 108, or rather the hitch 110, has been controlled by the execution of the (optimized) second sequence step 504b, one of the sensor signals may exceed a threshold and indicate a poor operation of the implement 106. The control unit 124 determines whether one of the sensor signals exceeds a corresponding reference value. If not (i. e. sensor signal is okay), the method steps back to step S101. Otherwise, the method proceeds to step S106.

At step S106, the control unit 124 optimizes the second sequence step 504b analogously as described above in the context of the recording of the second sequence step 504b. If an optimization of the sequence step during the recording of the sequence step was not sufficient, the sequence step may be optimized again. After the optimization of the sequence step, the method steps back again to step S101.

The learn mode is still inactive whereas the replay mode is still active so that the method proceeds to step S108 for executing the next (optimized) sequence step of the sequence control 502. The control unit 124 checks whether the condition 510 of the third sequence step 504c is fulfilled. According to the third sequence step 504c, the command 506 of the sequence step 504c will be triggered by the control unit 124 when a time delay defined by the condition 510 of the third sequence step 504c has been elapsed after the execution of the previous sequence step 504b. The current elapse time is monitored by the control unit 124 starting a counter simultaneously with the execution of the second sequence step 504b.

When the time delay has been elapsed, the method proceeds to step S103 for controlling the corresponding actuator under consideration of the command 506 and the parameter 508 of the (optimized) third sequence step 504c. The control unit 124 receives the command 506 and the parameter 508 of the third sequence step 504c from the memory 216 and controls the rotary actuators 162, 164, 166 and 168 for slowing down of the rotational movement of the tools 126, 128, 130 and 132 to a speed value and with a deceleration value as defined by parameters 508 of the third sequence step 504c. The tools 126, 128, 130 and 132 are decelerated accordingly. Depending on the deceleration, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the recording of the first sequence step 504a.

The method proceeds to step S105 and the control unit 124 compares the at least one sensor signal with a reference value for determining a poor operation of the implement 106 analogously as described above in the context of the recording of the third sequence step 504c. Depending on how aggressive the rotary actuators 162, 164, 166 and 168 have been decelerated by execution of the (optimized) third sequence step 504c, one of the sensor signals may exceed a threshold and indicate a poor operation of the implement 106. The control unit 124 determines whether one of the sensor signals exceeds a corresponding reference value. If not (i. e. sensor signal is okay), the method steps back to step S101. Otherwise, the method proceeds to step S106.

At step S106, the control unit 124 optimizes the third sequence step 504c analogously as described above in the context of the recording of the third sequence step 504c. If an optimization of the sequence step during the recording of the sequence step was not sufficient, the sequence step may be optimized again. After the optimization of the sequence step, the method steps back again to step S101.

The learn mode is still inactive whereas the replay mode is still active so that the method proceeds to step S108 for executing the next (optimized) sequence step of the sequence control 502. The control unit 124 checks whether the condition 510 of the fourth sequence step 504d is fulfilled. According to the fourth sequence step 504d, the command 506 of the sequence step 504d will be triggered by the control unit 124 when a time delay defined by the condition 510 of the fourth sequence step 504d has been elapsed after the execution of the previous sequence step 504c. The current elapse time is monitored by the control unit 124 starting a counter simultaneously with the execution of the third sequence step 504c.

When the time delay has been elapsed, the method proceeds to step S103 for controlling the corresponding actuator under consideration of the command 506 and the parameter 508 of the (optimized) fourth sequence step 504d. The control unit 124 receives the command 506 and the parameter 508 of the fourth sequence step 504d from the memory 216 and controls the linear actuators (158, 160) of the implement 106 for folding the implement 106 by pivoting the tool holders 142, 144, 146 and 148 about their corresponding hinge joints 150, 152, 154 and 156 to positions as defined by the parameters 508 of the fourth sequence step 504d. So, the tool holders 142, 144, 146 and 148 are folded acordingly. Depending on the folding of the implement 106, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the recording of the first sequence step 504a.

The method proceeds to step S105 and the control unit 124 compares the at least one sensor signal with a reference value for determining a poor operation of the implement 106 analogously as described above in the context of the recording of the fourth sequence step 504d. Depending on how jerky the linear actuators 158, 160 have been controlled by the execution of the (optimized) fourth sequence step 504d, one of the sensor signals may exceed a threshold and indicate a poor operation of the implement 106. The control unit 124 determines whether one of the sensor signals exceeds a corresponding reference value. If not (i. e. sensor signal is okay), the method steps back to step S101. Otherwise, the method proceeds to step S106.

At step S106, the control unit 124 optimizes the fourth sequence step 504d analogously as described above in the context of the recording of the fourth sequence step 504d. If an optimization of the sequence step during the recording of the sequence step was not sufficient, the sequence step may be optimized again. After the optimization of the sequence step, the method steps back again to step S101.

Then, the operator drives the agricultural machine 102 into the headland 304 and turns it along turning path 316 in the headland 304 as illustrated by the second position 308b of the agricultural machine 102 while the implement 106 is in the folded position, as illustrated in FIG. 3. Before leaving the headland 304 for traversing the agricultural field 170 along path 310d, the operator drives the agricultural machine 102 to a third waypoint 312c.

The learn mode is still inactive whereas the replay mode is still active so that the method proceeds to step S108 for executing the next (optimized) sequence step of the sequence control 502. While the agricultural machine 102 is moving along the turning path 316, the control unit 124 checks whether the condition 510 of the fifth sequence step 504e is fulfilled. According to the fifth sequence step 504e, the command 506 of the sequence step 504e will be triggered by the control unit 124 when the agricultural machine 102 has reached the third waypoint 312c. The control unit 124 receives the current position of the agricultural machine 102 from the positioning system 120 and compares the current position with the position of the third waypoint 312c. When the agricultural machine 102 has approached the third waypoint 312c close enough, the condition 510 of the fifth sequence step 504e is deemed to be fulfilled by the control unit 124. Then, the method proceeds to step S103 for controlling the corresponding actuator under consideration of the command 506 and the parameter 508 of the (optimized) fifth sequence step 504e.

The control unit 124 receives the command 506 and the parameter 508 of the fifth sequence step 504e from the memory 216 and controls the linear actuators (158, 160) of the implement 106 for unfolding the implement 106 by pivoting the tool holders 142, 144, 146 and 148 about their corresponding hinge joints 150, 152, 154 and 156 to positions as defined by the parameters 508 of the fifth sequence step 504d. So, the tool holders 142, 144, 146 and 148 are folded accordingly. Depending on the unfolding of the implement 106, different accelerations or forces may act on the implement 106 or the vehicle interface 108. These accelerations or forces may cause unintentional physical effects such as vibrations or noise.

Then, the method proceeds to step S104 and the control unit 124 receives a sensor signal from the at least one sensor 224, 232, 238, 240, 242, 244, 246 analogously as described above in the context of the recording of the first sequence step 504a.

The method proceeds to step S105 and the control unit 124 compares the at least one sensor signal with a reference value for determining a poor operation of the implement 106 analogously as described above in the context of the recording of the fifth sequence step 504e. Depending on how jerky the linear actuators 158, 160 have been controlled by the execution of the (optimized) fifth sequence step 504e, one of the sensor signals may exceed a threshold and indicate a poor operation of the implement 106. The control unit 124 determines whether one of the sensor signals exceeds a corresponding reference value. If not (i. e. sensor signal is okay), the method steps back to step S101. Otherwise, the method proceeds to step S106.

At step S106, the control unit 124 optimizes the fifth sequence step 504e analogously as described above in the context of the recording of the fifth sequence step 504e. If an optimization of the sequence step during the recording of the sequence step was not sufficient, the sequence step may be optimized again. After the optimization of the sequence step, the method steps back again to step S101.

Since all sequence steps 504a to 504e have been executed by the control unit 124 now, the operator has deactivated the sequence control 502. Thus, both learn mode and replay mode are inactive. Consequently, the method proceeds from step S101 via step S107 to step S109 and ends. The sequence control 502 may be restarted by the operator again by activating the learn mode or the replay mode.

During the recording or executing of the sequence steps 504a to 504e, one or more sequence steps may be optimized as described above. In this regard, the optimization of a sequence step may not only have an optimizing effect for even this sequence step but also for another sequence step of the sequence control 502. For example, according to the second sequence step 504b, the hitch 110 may be raised and stopped too late so that the vehicle interface 108 or the linear actuator 222 collides against an end stop. But such a collision may also induce vibrations into the tool holders 142, 144, 146 and 148 that are folded simultaneously according to the fourth sequence step 504d and amplify another collision of the tool holders 142, 144, 146, 148 against an end stop of the corresponding tool holders. In such a situation, an optimized operation of the hitch 110 avoiding a collision against an end stop would avoid the amplification of the collision of the tool holders and consequently also reduce the impact of a poor operation of the linear actuators 158, 160 causing the collision of the tool holders 142, 144 against the end stop. I. e., the optimization of the second sequence step 504b may also have an optimizing effect for the fourth sequence step 504d and reduce an impact caused by the actuators controlled due to an execution of this fourth sequence step 504d.

All references cited herein are incorporated herein in their entireties. If there is a conflict between definitions herein and in an incorporated reference, the definition herein shall control.

### LISTING OF DRAWING ELEMENTS

| | | | |
|---|---|---|---|
| 102 | agricultural machine | 114 | chassis member |
| 104 | vehicle | 116a | power supply |
| 106 | implement | 116b | power supply |
| 108 | vehicle interface | 116c | power supply |
| 110 | hitch | 118 | cabin |
| 112 | coupling | 120 | positioning system |
| 122 | human machine interface | 168 | rotary actuator |
| 124 | control unit | 170 | agricultural field |
| 126 | tool | 172 | wheel |
| 128 | tool | 202 | display |
| 130 | tool | 204 | joystick |
| 132 | tool | 206 | lever |
| 134 | tine | 208 | knob |
| 136 | tine | 210 | button |
| 138 | tine | 212 | button |
| 140 | tine | 214 | rocker |
| 142 | tool holder | 216 | memory |
| 144 | tool holder | 218 | controller |
| 146 | tool holder | 220 | line |
| 148 | tool holder | 222 | linear actuator |
| 150 | hinge joint | 224 | sensor |
| 152 | hinge joint | 226 | linkage arm |
| 154 | hinge joint | 228 | linear actuator |
| 156 | hinge joint | 230 | line |
| 158 | linear actuator | 232 | sensor |
| 160 | linear actuator | 234 | rotary actuator |
| 162 | rotary actuator | 236 | line |
| 164 | rotary actuator | 238 | sensor |
| 166 | rotary actuator | 240 | sensor |
| 242 | sensor | 504a | sequence step |
| 244 | sensor | 504b | sequence step |
| 246 | sensor | 504c | sequence step |
| 248 | brake | 504d | sequence step |
| 250 | brake actuator | 504e | sequence step |
| 302 | field boundary | 506 | command |
| 304 | headland | 508 | parameter |
| 306 | headland boundary | 510 | condition |
| 308a | first position | | |
| 308b | second position | | |
| 308c | third position | | |
| 310a | path | | |
| 310b | path | | |
| 310c | path | | |
| 310d | path | | |
| 310e | path | | |
| 310f | path | | |
| 312a | first waypoint | | |
| 312b | second waypoint | | |
| 312c | third waypoint | | |
| 314a | waypoint | | |
| 316 | turning path | | |
| 502 | sequence control | | |

## Claims

1. An agricultural machine (102) comprising
an implement (106);
an actuator (222, 228, 234, 250);
a human machine interface (122) for manually controlling the actuator (222, 228, 234);
a control unit (124); and
at least one sensor (224, 232, 238, 240, 242, 244, 246); wherein
the control unit (124) is configured to
record a sequence step (504a to 504e) of a sequence control (502) comprising a command to control the actuator (222, 228, 234, 250) based on a manual operation of the human machine interface (122) if a learn mode is active;
execute the recorded sequence step (504a to 504e) comprising the command to control the actuator (222, 228, 234, 250) if a replay mode is active;
control the actuator (222, 228, 234, 250) according to the command of the sequence step (504a to 504e);
receive at least one sensor signal from the at least one sensor (224, 232, 238, 240, 242, 244, 246);
compare the at least one sensor signal with a reference value for determining a poor operation of the implement (106) in response to a controlling of the actuator (222, 228, 234, 250) according to the command of the sequence step (504a to 504e); and
optimize the sequence step (504a to 504e) of the sequence control (502) in case of a poor operation of the implement (106).

2. The agricultural machine (102) of claim 1, wherein the sequence step (504a to 504e) comprises at least one parameter assigned to the command of the sequence step (504a to 504e); and
wherein the control unit (124) is configured to adjust the parameter of the sequence step (504a to 504e) if the at least one sensor signal exceeds the reference value.

3. The agricultural machine (102) of any one of claims 1 to 2, wherein the at least one sensor signal is a pressure signal and wherein the poor operation of the implement (106) is determined if the pressure signal exceeds the reference value.

4. The agricultural machine (102) of any one of the preceding claims, wherein the at least one sensor signal is a strain signal and wherein the poor operation of the implement (106) is determined if the strain signal exceeds the reference value.

5. The agricultural machine (102) of any one of the preceding claims, wherein the at least one sensor signal is an acoustic signal and wherein the poor operation of the implement (106) is determined if the acoustic signal exceeds the reference value.

6. The agricultural machine (102) of claim 5, wherein the reference value defines a volume threshold within a frequency band representative for noises caused by the implement (106) hitting the agricultural field (170) or an end stop.

7. The agricultural machine (102) of any one of the preceding claims, comprising a vehicle interface (108); wherein
the at least one sensor (224, 232, 238, 240, 242, 244, 246) is configured to detect an impact due to
a collision against an end stop of the vehicle interface (108);
a collision against an end stop of the actuator (222, 228, 234, 250); or
the implement (106) hitting the agricultural field (170).

8. The agricultural machine (102) of claim 7, when referring back to claim 2, wherein the control unit (124) is configured to reduce the impact by adjusting the at least one parameter.

9. The agricultural machine (102) of claim 8, wherein the at least one parameter comprises a speed or acceleration parameter; and
wherein the control unit (124) is configured to reduce the at least one parameter for reducing the impact.

10. The agricultural machine (102) of claim 8 or 9, wherein the at least one parameter comprises a position parameter of the vehicle interface (108) or the implement (106); and
wherein the control unit (124) is configured to adjust the position parameter for reducing the impact.

11. The agricultural machine (102) of any one of the preceding claims, wherein the sequence step (504a to 504e) of the sequence control (502) comprises a condition for triggering the command of the sequence step (504a to 504e); and
wherein the control unit (124) is configured to adjust the condition of the sequence step (504a to 504e) if the sensor signal exceeds the reference value.

12. The agricultural machine (102) of claim 11, wherein the condition for triggering the command of the sequence step (504a to 504e) comprises a waypoint (312a, 312b, 312c) at which the command of the sequence step (504a to 504e) is executed;
wherein the control unit (124) is configured to adjust the position of the waypoint (312a, 312b, 312c).

13. The agricultural machine (102) of claim 11 or 12, wherein the condition for triggering the command of the sequence step (504a to 504e) comprises a time point at which the command of the sequence step (504a to 504e) is executed;
wherein the control unit (124) is configured to adjust the time point.

14. The agricultural machine (102) of claim 7 or any dependent claim thereon, comprising
a first actuator (222);
a second actuator (228, 234, 250);
wherein the control unit (124) is configured to
record a first sequence step (504a) of the sequence control (502) comprising a command to control the first actuator (222);
record a second sequence step (504b) of the sequence control (502) comprising a command to control the second actuator (228, 234, 250); and
reduce an impact caused by the second actuator (228, 234, 250) by optimizing the first sequence step (504a).

15. A method for a sequence control (502) comprising:
recording a sequence step (504a to 504e) of a sequence control (502) comprising a command to control an actuator (222, 228, 234, 250) based on a manual operation of a human machine interface (122) if a learn mode is active;
executing the recorded sequence step (504a to 504e) comprising the command to control the actuator (222, 228, 234, 250) if a replay mode is active;
controlling the actuator (222, 228, 234, 250) according to the command;
receiving at least one sensor signal from at least one sensor (224, 232, 238, 240, 242, 244, 246);
comparing the at least one sensor signal with a reference value for determining a poor operation of an implement (106) in response to a controlling of the actuator (222, 228, 234, 250) according to the command of the sequence step (504a to 504e); and
optimizing the sequence step (504a to 504e) of the sequence control (502) in case of a poor operation of the implement (106).
